# EUROPEAN PATENT APPLICATION

(11) **EP 1 376 590 A2**
(43) Date of publication of application: **02.01.2004**
(21) Application number: 03010496.2
(22) Date of filing: 09.05.2003
(51) Int. Cl.: G11B 33/12, G11B 33/14, G11B 25/04

(54) **Storage device comprising circuit board on which heat-generating circuit component is mounted**

(30) Priority: 27.06.2002 JP 2002188446
(71) Applicant: Kabushiki Kaisha Toshiba, Minato-ku, Tokyo 105 (JP)
(72) Inventor: Ooka, Satoshi, c/o Toshiba corporation, Tokyo 105-8001 (JP); Kubota, Toshiharu, c/o Toshiba corporation, Tokyo 105-8001 (JP)
(74) Representative: Henkel, Feiler, Hänzel

(57) **Abstract**

A storage device includes a chassis (15), and a circuit board (17) supported by the chassis (15) and holding a circuit component (24, 51) thereon. The circuit board (17) is covered with an insulating sheet (32, 52), and the insulating sheet (32, 52) has an opening (34, 54) at a position opposed to the circuit component (24, 51). The opening (32, 54) is covered with a thermal conduction sheet (33, 53) from an opposite side to that of the circuit board (17), and the thermal conduction sheet (33, 53) is thermally connected to the circuit component (24, 51) through the opening (34, 54).

## Description

The present invention relates to a storage device, such as a hard disk drive comprising a metallic chassis and a printed circuit board fixed to the metal chassis.

The hard disk drive used in a portable computer comprises a metallic chassis, a printed circuit board and a metallic cover. The chassis supports major structural elements, such as a magnetic disk, a carriage including a magnetic head, a spindle motor used for rotating the magnetic disk, and avoice coil motor used for driving the carriage. The printed circuit board is fixed to the chassis. The printed circuit board holds a plurality of LSI packages used for controlling the magnetic head, the spindle motor and the voice coil motor. The cover is fixed to the chassis and covers the printed circuit board and the LSI packages.

Recent hard disk drives are sophisticated and process signals at high speed, and the LSI packages incorporated in them generate a large amount of heat. The LSI packages have to be provided with efficient heat radiating characteristics to ensure their reliable operations.

Jpn. Pat. Appln. KOKAI Publication No. 2001-229660 discloses an optical disk drive wherein the heat generated by an LSI package radiates through a metallic cover. In the optical disk drive, a printed circuit board and a cover are electrically insulated by inserting an insulating film between them. The insulating film has an opening at a position opposed to the LSI package. The opening is covered with a heat radiating sheet. Most parts of the heat radiating sheet are attached to the inner surface of the cover. When the printed circuit board is covered with the cover, the heat radiating sheet is in contact with the LSI package, allowing heat to be transmitted from the LSI package to the cover.

As described above, in a conventional optical disk drive, the heat of the LSI package is transmitted to the cover through the heat radiating sheet, and the cover is utilized as a heat sink. However, this structure is disadvantageous in that the heat transmission path from the LSI package to the cover inevitably has an increased thermal resistance because of the heat radiating sheet interposed between the heat radiating cover and the LSI package. As a result, the heat of the LSI package cannot be transmitted to the cover with high efficiency, and the heat radiation performance of the LSI package is therefore restricted.

An object of the present invention is to provide a storage device which enables efficient heat radiation from a circuit component and therefore allows this circuit component to have excellent heat radiation performance.

To achieve the objects, a storage device according to one aspect of the present invention comprises:
a chassis; a circuit board supported by the chassis and including a circuit component which generates heat during operation; an insulating sheet covering the circuit board and having an opening at a position opposed to the circuit component; and a thermal conduction sheet covering the opening of the insulating sheet from an opposite side to that of the circuit board and thermally connected to the circuit component through the opening.

With this structure, a structural element which would prevent thermal conduction is not present between the circuit component and the thermal conduction sheet. Accordingly, the heat transmission path from the circuit component to the thermal conduction sheet has a low thermal resistance.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a perspective view of a portable computer according to the first embodiment of the present invention.
FIG. 2 is a plan view showing how a first printed circuit board, a second printed circuit board and a hard disk drive are incorporated in a lower housing in the first embodiment of the present invention.
FIG. 3 is a perspective view showing how a hard disk drive according to the first embodiment looks like when viewed from the position of the upper cover.
FIG. 4 is a perspective view showing how a hard disk drive according to the first embodiment looks like when viewed from the position of the lower cover.
FIG. 5 is an exploded perspective view of the hard disk drive of the first embodiment of the present invention and shows positional relationships between the lower cover and the printed circuit board supported by the chassis.
FIG. 6 is an exploded perspective view of the hard disk drive of the first embodiment of the present invention and shows positional relationships among the chassis, printed circuit board, first insulator, second insulator and lower cover.
FIG. 7 is an exploded perspective view of the hard disk drive of the first embodiment of the present invention and shows positional relationships among upper cover, chassis, printed circuit board, first insulator, second insulator and lower cover.
FIG. 8 is a sectional view of the hard disk drive according to the first embodiment of the present invention.
FIG. 9 is a sectional view of the hard disk drive according to the first embodiment of the present invention and shows positional relationship between an LSI package and a first insulator.
FIG. 10 is an enlarged sectional view of portion A in FIG. 8.
FIG. 11 is a sectional view of a hard disk drive according to the second embodiment of the present invention and shows positional relationships between an LSI package and a first insulator.
FIG. 12 is a sectional view of a hard disk drive according to the third embodiment of the present invention and shows positional relationships between an LSI package and a first insulator.
FIG. 13 is a sectional view of a hard disk drive according to the fourth embodiment of the present invention and shows positional relationships between an LSI package and a first insulator.
FIG. 14 is a sectional view of a hard disk drive according to the fifth embodiment of the present invention.
FIG. 15 is a sectional view of the hard disk drive of the fifth embodiment of the present invention and shows positional relationships among an LSI package, a first insulator and a second insulator.
FIG. 16 is a plan view showing how the lower housing according to the sixth embodiment of the present invention contains a first printed circuit board (on which a chip set is mounted) and a hard disk drive.
FIG. 17 is a sectional view of the portable computer of the sixth embodiment of the present invention and shows positional relationships between an insulator and the first printed circuit board contained in the housing.
FIG. 18 is a sectional view of the portable computer of the sixth embodiment of the present invention and shows positional relationships among a chip set (which is mounted on the first printed circuit board), an insulator and the bottom wall of a lower housing.
FIG. 19 is a sectional view showing portion B in FIG. 17 in an enlarged scale.

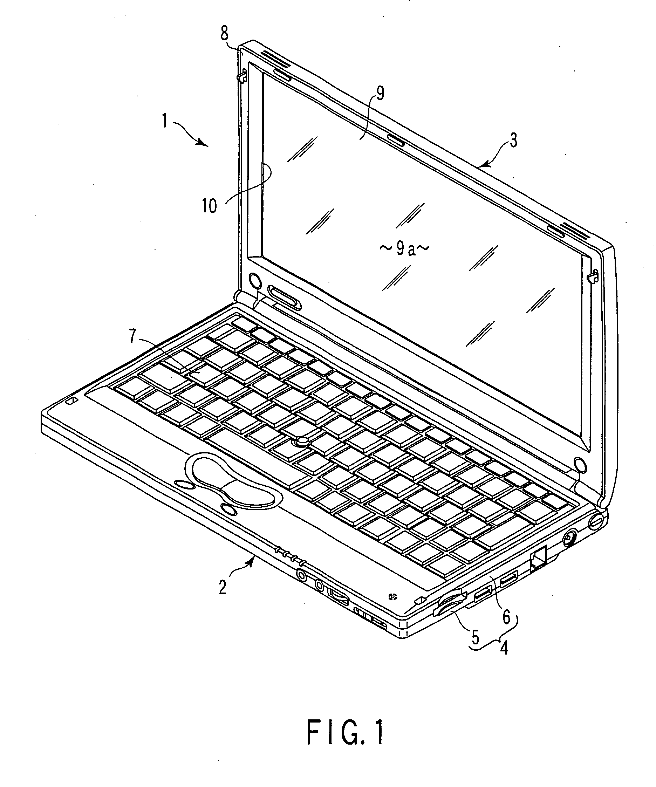

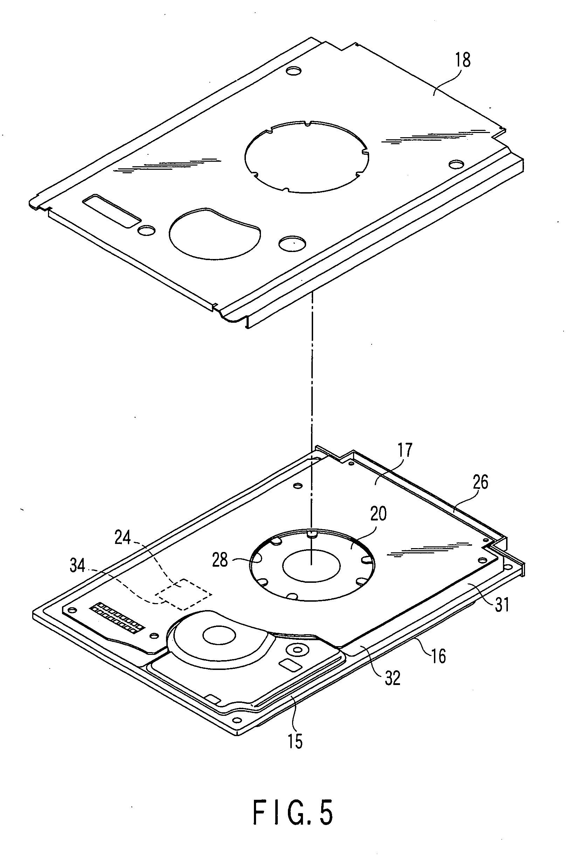

A portable computer according to the first embodiment of the present invention will now be described with reference to FIGS. 1-10.

FIG. 1 shows a portable computer 1, which is an example of an electronic apparatus. The portable computer 1 comprises a computer main body 2 and a display unit 3 supported by the computer main body 2.

The computer main body 2 comprises a housing 4. The housing 4 is made up of a lower housing 5 and an upper housing 6. The upper housing 6 supports a keyboard 7. The display unit 3 is provided with a display housing 8 and a liquid crystal panel 9 received inside the display housing 8. The display housing 8 is rotatably coupled to the rear portion of the housing 4 by means of hinges. The liquid crystal display panel 9 includes a screen 9a on which images are displayed. The screen 9a is fitted in an opening section 10 formed in the front portion of the display housing 8 and is exposed to the outside of the display housing 8.

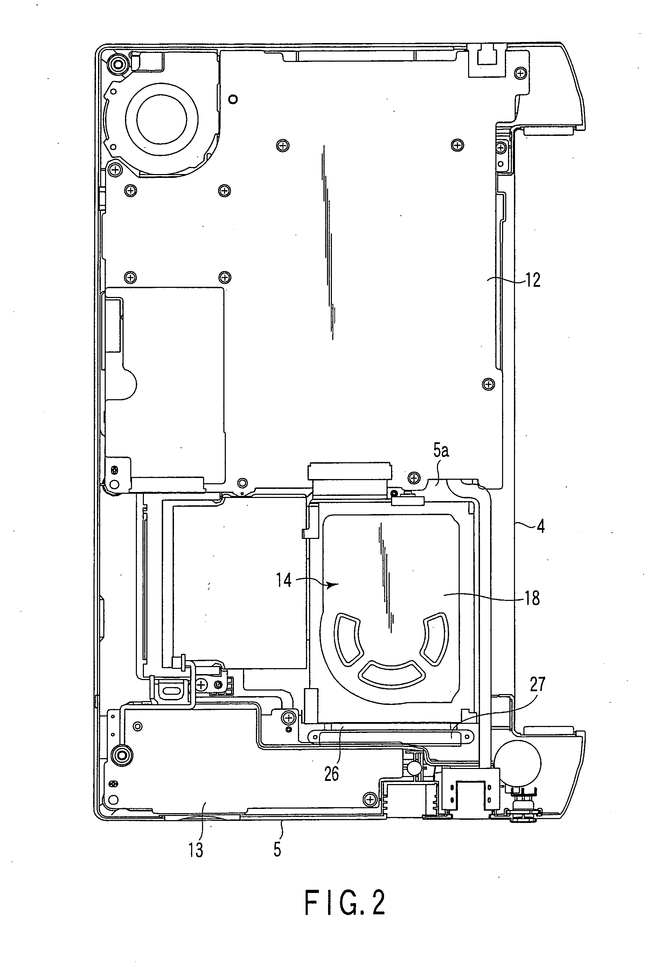

As shown in FIG. 2, the housing 4 contains a first printed circuit board 12, a second printed circuit board 13, and a hard disk drive 14 serving as a storage device. The first and second printed circuit boards 12 and 13 are located away from each other in the widthwise direction of the housing 4 and supported on a bottom wall 5a of the lower housing 5.

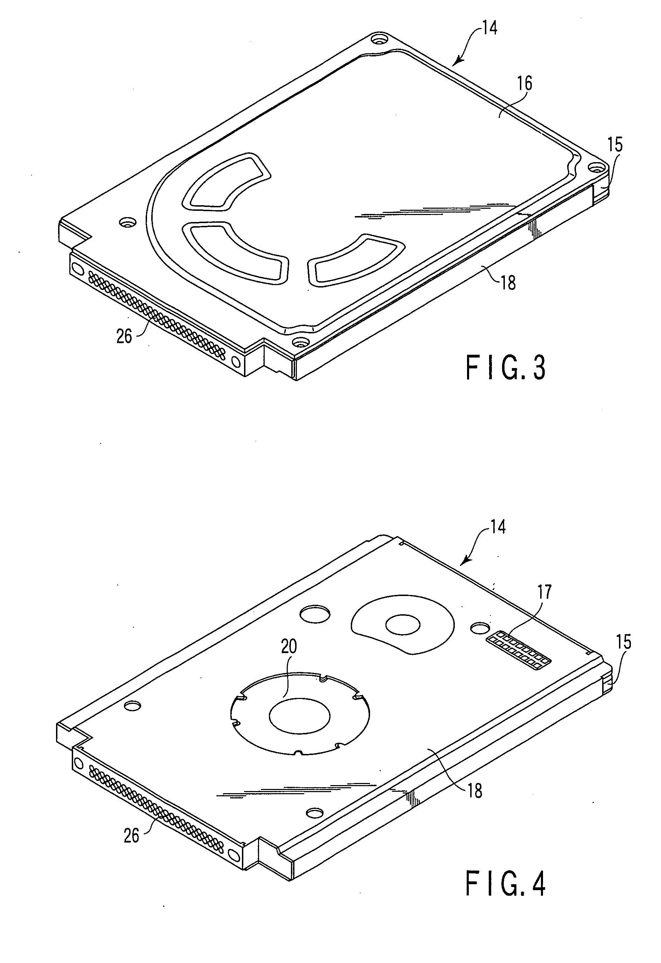

The hard disk drive 14 is located between the first and second printed circuit boards 12 and 13 and supported on the bottom wall 5a of the lower housing 5. The hard disk drive 14 is of 1.8-inch size, and its outward shape is thin and compact, as shown in FIGS. 3 and 4.

As shown in FIGS. 3 through 7, the hard disk drive 14 comprises a chassis 15, an upper cover 16, a printed circuit board 17 and a lower cover 18. The chassis 15 is formed of a metallic material, and is conductive. The chassis 15 has a support wall 19. This support wall 19 supports major structural elements, such as a magnetic disk, a carriage on which a magnetic head is mounted, a voice coil motor used for driving the carriage, and a spindle motor 20 used for rotating the magnetic disk. The spindle motor 20 is cylindrical and projected outward from the support wall 19 to the outside of the chassis 15.

The upper cover 16 is formed by press working of a sheet metal, and is fixed to the chassis 15. The upper cover 16 defines a sealed chamber (not shown) together with the chassis 15. The magnetic disk is stored in the sealed chamber, as well as other structural elements.

The printed circuit board 17 is fixed to the support wall 19 of the chassis 15 by means of a number of screws (not shown). The printed circuit board 17 is electrically connected to a connector 22. The connector 22 is formed in the support wall 19 in an exposed state.

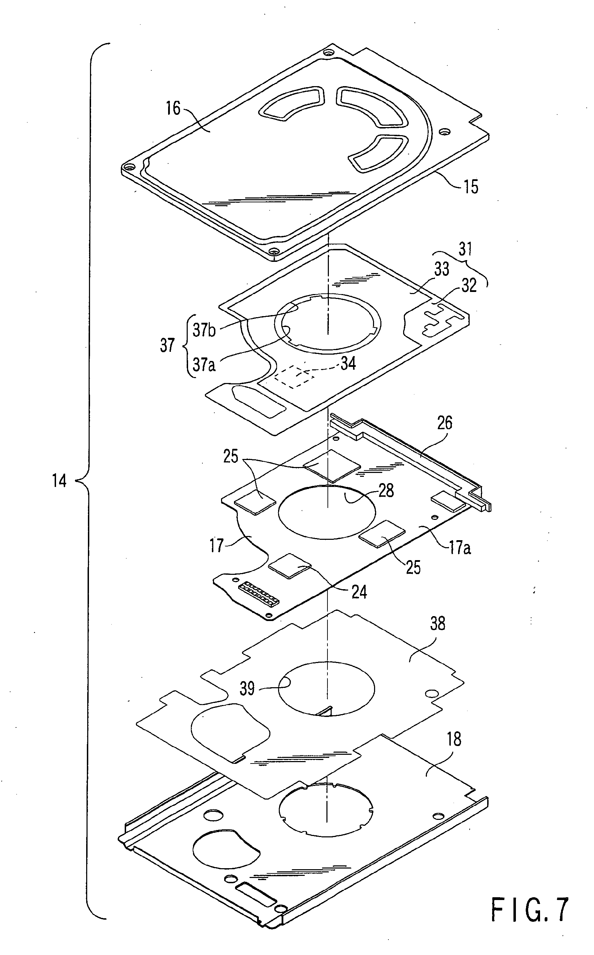

As shown in FIG. 7, the printed circuit board 17 has an installation surface 17a. The installation surface 17a faces the support wall 19 of the chassis 15. Circuit components such as one LSI package 24 and a plurality of semiconductor packages 25, and one relay connector 26 are mounted on the installation surface 17a. In addition, a plurality of lands (not shown) and conductive patterns (not shown) are formed on the installation surface 17a of the printed circuit board 17. The lands and the conductive patterns are located around the LSI package 24.

The LSI package 24 controls the magnetic head, the spindle motor 20 and the voice coil motor, and therefore generates a very large amount of heat. This being so, the LSI package 24 requires efficient heat radiation so as to maintain a stable operation.

The relay connector 26 is located at one end of the printed circuit board 17 and is exposed to the outside of the chassis 15. When the hard disk drive 14 is fixed to the bottom wall 5a of the lower housing 5, the relay connector 26 is electrically connected to a connector receptacle 27 provided for the second printed circuit board 13.

The spindle motor 20 supported on the chassis 15 is projected toward the center of the printed circuit board 17. In other words, the spindle motor 20 serves as a projection protruding from the chassis 15. The distal end of the spindle motor 20 is inserted in a through hole 28 formed in the center of the printed circuit board 17.

The lower cover 18 is formed by press working of a sheet metal, and is fixed to the chassis 15. The lower cover 18 is located on that side of the chassis 15 which is opposite to the upper cover 16, and covers the printed circuit board 17.

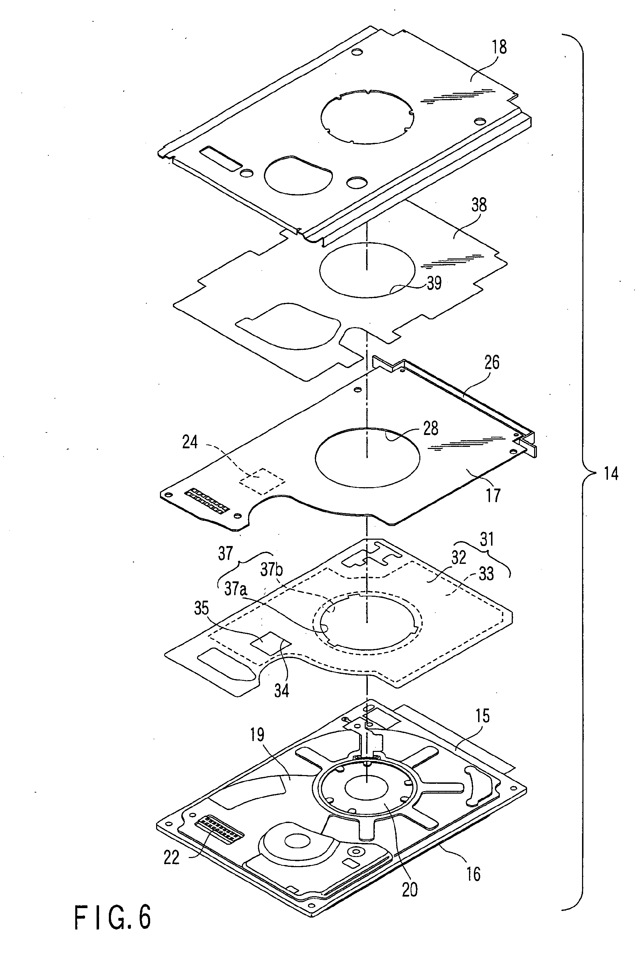

As shown in FIGS. 6-8, a soft first insulator 31 is interposed between the installation surface 17a of the printed circuit board 17 and the support wall 19 of the chassis 15. The first insulator 31 provides electrical insulation between the printed circuit board 17 and the chassis 15. The first insulator 31 has a shape that conforms to that of the installation surface 17a of the printed circuit board 17. The first insulator 31 includes an insulating sheet 32 (which serves as an insulating layer) and a thermal conduction sheet 33 (which serves as a thermal conduction layer).

The insulating sheet 32 is formed of a synthetic resin film having an electrically insulating characteristic, and covers the installation surface 17a of the printed circuit board 17. The insulating sheet 32 has an opening 34 at a position opposed to the LSI package 24. The opening 34 has a square shape in which the LSI package 24 can be fitted, and extends in the thickness direction of the insulating sheet 32.

The thermal conduction sheet 33 is made, for example, of a copper foil having excellent thermal conductivity. The thermal conduction sheet 33 is larger than the LSI package 24 and is laid over the insulating sheet 32. A pressure sensitive adhesive double coated tape 35 is inserted between the thermal conduction sheet 33 and the insulating sheet 32. The adhesive double coated tape 35 is thermally conductive and adheres the thermal conduction sheet 33 to the insulating sheet 32. It should be noted that the thermal conduction sheet 33 covers most areas of the insulating sheet 32 which face the chassis 15. This being so, the thermal conduction sheet 33 is located between the support wall 19 of the chassis 15 and the insulating sheet 32.

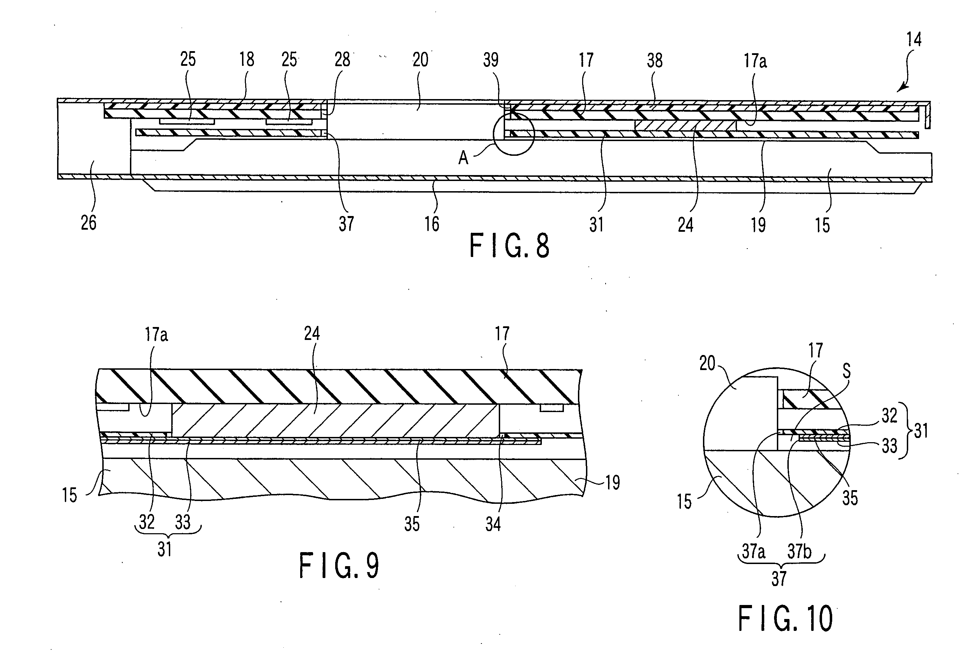

As shown in FIG. 9, the thermal conduction sheet 33 covers the opening 34 of the insulating sheet 32 from the opposite side to that of the installation surface 17a of the printed circuit board 17. With this structure, the thermal conduction sheet 33 is opposed to the LSI package 24, with the opening 34 located therebetween.

The adhesive double coated tape 35, which adheres the thermal conduction sheet 33 to the insulating sheet 32, is exposed in the opening 34. At the position of the opening 34, the double coated tape 35 is located between the LSI package 24 and the thermal conduction sheet 33. With this structure, the double coated tape 35 thermally connects the LSI package 24 and the thermal conduction sheet 33 together.

The first insulator 31 has a circular through hole 37<formed in the center thereof. As shown in FIG. 10, the through hole 37 includes a first opening region 37a extending in the thickness direction of the insulating sheet 32, and a second opening region 37b extending in the thickness direction of the thermal conduction sheet 33. The first opening region 37a and the second opening region 37b are coaxial with each other.

The distal end of the spindle motor 20 is inserted in the through hole 37. With this structure, positional relationships between the chassis 15 and the first insulator 31 are determined, and the opening 34 of the insulating sheet 33 can be positioned with reference to the LSI package 24.

The second opening region 37b of the thermal conduction sheet 33 has a diameter larger than that of the first opening region 37a of the insulating sheet 32. The opening edge of the second opening region 37b is located away from the outer peripheral surface of the spindle motor 20, thereby defining a gap S between the opening edge and the outer peripheral surface of the spindle motor 20.

A soft second insulator 38 is interposed between the printed circuit board 17 and the lower cover 18. The second insulator 38 is formed of a synthetic resin film and provides electrical insulation between the printed circuit board 17 and the lower cover 18. The second insulator 38 has a through hole 39 in the center thereof. The through hole 39 extends in the thickness direction of the second insulator 38 and is coaxial with the through hole 28 of the printed circuit board 17 and the through hole 37 of the first insulator 31. The distal end of the spindle motor 20 is inserted into the through hole 28 and further into the through hole 39. With this structure, positional relationships between the printed circuit board 17 and the second insulator 31 are determined.

In the structure described above, the LSI package 24 mounted on the printed circuit board 17 is thermally connected to the thermal conduction sheet 33 through the opening 34 of the insulating sheet 32. Therefore, the heat generated by the LSI package 24 is transmitted directly to the thermal conduction sheet 33; it is not transmitted through the insulating sheet 32. In the thermal conduction sheet 33, the heat diffuses to each portion. Since the thermal resistance of the heat transmission path from the LSI package 24 to the thermal conduction sheet 33 is reduced, the heat of the LSI package 24 can be transmitted to the thermal conduction sheet 33 with high efficiency. Hence, the heat radiation performance of the LSI package 24 is improved, and the temperature at which the LSI package 24 operates can be kept at an optimal value.

The opening 34 of the insulating sheet 32 has such a size as allows the LSI package 24 to be fitted therein. Owing to this structure, the installation surface 17a of the printed circuit board 17 is completely covered with the insulating sheet 32, except for the portion corresponding to the LSI package 24. Since the thermal conduction sheet 33 and the installation surface 17a of the printed circuit board 17 do not come into contact with each other, the electrical insulation between them is reliable. Short circuit troubles are prevented, and there is no need to provide a wide space for electrical insulation between the thermal conduction sheet 33 and the printed circuit board 17. As a result, the hard disk drive 14 can be thin and compact in size.

Moreover, since the spindle motor 20 projected from the chassis 15 is inserted into the through hole 37 of the first insulator 31, positional relationships between the first insulator 31 and the chassis 15 are determined. Hence, the first insulator 31 is prevented from being shifted when the first insulator 31 is laid over the support wall 19 of the chassis 15.

The insulating sheet 32 and the thermal conduction sheet 33 are adhered to each other by means of the adhesive double coated tape 35. This structure prevents the sheets 32 and 33 from being shifted relative to each other, eliminating the need to position the sheets 32 and 33. Hence, the hard disk drive 14 can be assembled with ease.

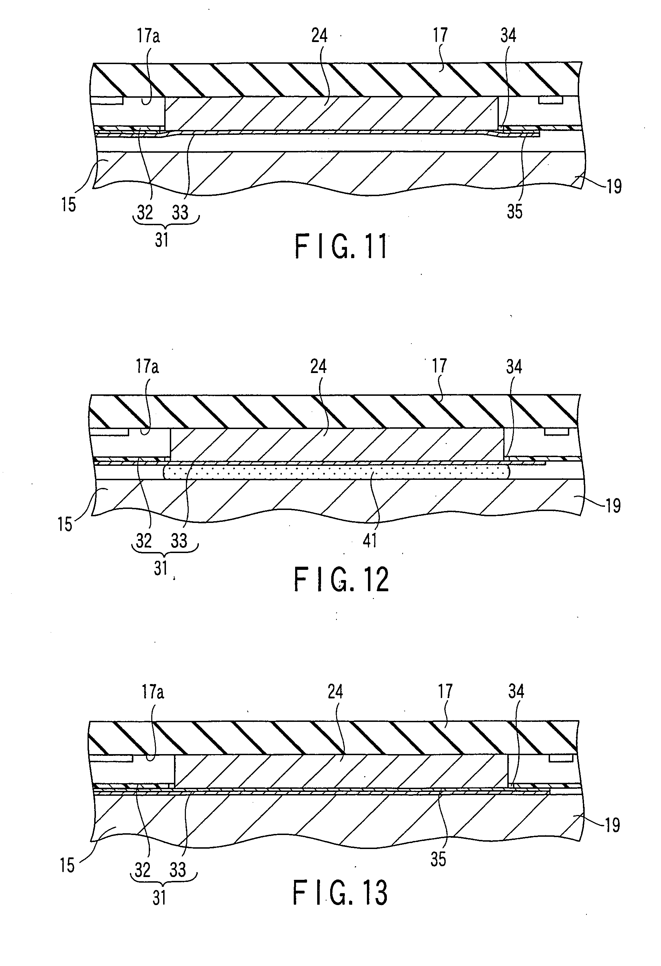

The present invention is not limited to the first embodiment described above and can be embodied as shown in FIG. 11, which shows the second embodiment.

The second embodiment differs from the first embodiment in light of the structure of the first insulator 31. Except for this, the first and second embodiments are similar in the fundamental structures of the hard disk drives 14 they employ.

As shown in FIG. 11, the pressure sensitive adhesive double coated tape 35 of the first insulator 31 is inserted between the insulating sheet 32 and the thermal conduction sheet 33 in such a manner as to avoid the opening 34. In other words, the double coated tape 35 is removed from the position corresponding to the opening 34, and the thermal conduction sheet 33 is exposed in the opening 34. With this structure, the LSI package 24 is in direct contact with the thermal conduction sheet 33 at the position corresponding to the opening 34.

Since the structure mentioned above allows the heat of the LSI package 24 to be transmitted directly to the thermal conduction sheet 33, the heat transmission path from the LSI package 24 to the thermal conduction sheet 33 has a reduced thermal resistance. Hence, the heat of the LSI package 24 can be transmitted to the thermal conduction sheet 33 with high efficiency, and the heat radiation performance of the LSI package 24 can be improved.

FIG. 12 shows the third embodiment of the present invention.

In the third embodiment, the insulating sheet 32 of the first insulator 31 and the thermal conduction sheet 33 are laid directly on each other. As in the second embodiment, therefore, the thermal conduction sheet 33 is exposed in the opening 34 and is in direct contact with the LSI package 24.

An elastic member 41 is inserted between the thermal conduction sheet 33 and the support wall 19 of the chassis 15. The elastic member 41 is made, for example, of a sponge having thermal conductivity. The elastic member 41 is sandwiched between the thermal conduction sheet 33 and the support wall 19, and thermally connects the thermal conduction sheet 33 and the support wall 19 together. The elastic member 41 is located right under the LSI package 24.

With the structure mentioned above, the elastic member 41 pushes the thermal conduction sheet 33 against the LSI package 24. As a result, the thermal conduction sheet 33 is in tight contact with the LSI package 24.

In the structure described above, the heat generated by the LSI package 24 is transmitted first to the thermal conduction sheet 33, and is then transmitted to the chassis 15 through the elastic member 41. Therefore, the metallic chassis 15 can be used as a heat sink of the LSI package 24, and the heat radiation characteristics of the LSI package 24 can be improved.

Since the thermal conduction sheet 33 is pressed against the LSI package 24 by the elastic member 41, reliable tight contact is ensured between the thermal conduction sheet 33 and the LSI package 24. Hence, the thermal resistance of the heat transmission path from the LSI package 24 to the thermal conduction sheet 33 can be as low as possible, and the heat of the LSI package 24 can be transmitted to the thermal conduction sheet 33 with high efficiency.

In the second and third embodiments, grease having thermal conductivity may be provided between the thermal conduction sheet 33 and the LSI package 24. With this structure, a gap which would affect the thermal conduction is not formed between the thermal conduction sheet 33 and the LSI package 24. As a result, further reliable thermal connection is ensured between the thermal conduction sheet 33 and the LSI package 24.

FIG. 13 shows the fourth embodiment of the present invention. In the fourth embodiment, the thermal conduction sheet 33 of the first insulator 31 is laid over the support wall 19 of the chassis 15. With this structure, the thermal conduction sheet 33 is thermally connected to the chassis 15.

In the structure of the fourth embodiment, the heat of the LSI package 24 is transmitted first to the thermal conduction sheet 33, and then to the chassis 15. Therefore, the metallic chassis 15 is used as a heat sink that improves the heat radiating characteristic of the LSI package 24.

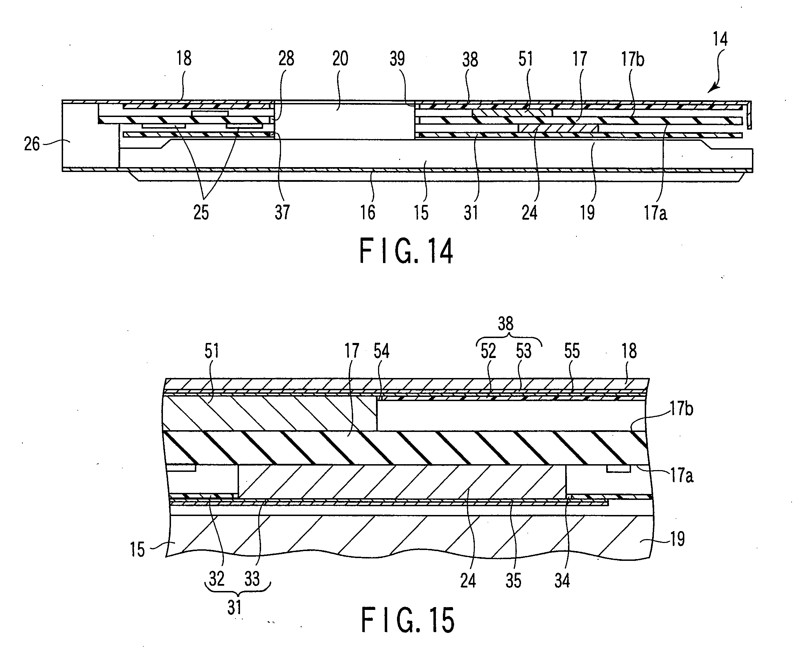

FIGS. 14 and 15 show the fifth embodiment of the present invention.

The fifth embodiment differs from the first embodiment in light of the structures of the printed circuit board 17 and second insulator 38. Except for this, the first and fifth embodiments are similar in the fundamental structures of the hard disk drives 14 they employ.

As shown in FIG. 14, the printed circuit board 17 has a second installation surface 17b which is formed on the side opposite to that of the chassis 15. An LSI package 51 is installed on the installation surface 17b as a circuit component. This LSI package 51 generates a very large amount of heat during operation, and the heat must be radiated efficiently to maintain a reliable operation. In addition, a plurality of lands (not shown) and conductive patterns (not shown) are formed on the installation surface 17b. The lands and the conductive patterns are located around the LSI package 51.

As shown in FIG. 15, the second insulator 38 includes an insulating sheet 52 serving as an insulating layer, and a thermal conduction sheet 53 serving as a thermally conductive layer. The insulating sheet 52 is formed of a synthetic resin film having an electrically insulating characteristic, and covers the installation surface 17b of the printed circuit board 17. The insulating sheet 52 has an opening 54 at a position opposed to the LSI package 51. The opening 54 has a shape in which the LSI package 51 can be fitted, and extends in the thickness direction of the insulating sheet 52.

The thermal conduction sheet 53 is made, for example, of a copper foil having excellent thermal conductivity. The thermal conduction sheet 53 is larger than the LSI package 51 and is laid over the insulating sheet 52. A pressure sensitive adhesive double coated tape 55 is inserted between the thermal conduction sheet 53 and the insulating sheet 52. The adhesive double coated tape 55 is thermally conductive and adheres the thermal conduction sheet 53 to the insulating sheet 52. It should be noted that the thermal conduction sheet 53 covers most areas of the insulating sheet 52 which face the lower cover 18. This being so, the thermal conduction sheet 53 is located between the lower cover 18 and the insulating sheet 52, and is thermally connected to the lower cover 18.

As shown in FIG. 15, the thermal conduction sheet 53 covers the opening 54 of the insulating sheet 52 from the direction of the lower cover 18. With this structure, the thermal conduction sheet 53 is opposed to the LSI package 51, with the opening 54 located therebetween.

The adhesive double coated tape 55, which adheres the thermal conduction sheet 53 to the insulating sheet 52, is exposed in the opening 54. At the position of the opening 54, the double coated tape 55 is located between the LSI package 51 and the thermal conduction sheet 53. With this structure, the double coated tape 55 thermally connects the LSI package 51 and the thermal conduction sheet 53 together.

With the structure described above, the LSI package 51 installed on the second installation surface 17b of the printed circuit board 17 is thermally connected to the thermal conduction sheet 53 through the opening 54 of the insulating sheet 52. The heat generated by the LSI package 51 is transmitted directly to the thermal conduction sheet 53, and the heat diffuses to each portion of the thermal conduction sheet 53. Since the thermal resistance of the heat transmission path from the LSI package 51 to the thermal conduction sheet 53 is reduced, the heat of the LSI package 51 can be transmitted to the thermal conduction sheet 53 with high efficiency. In this manner, the heat generated by the LSI packages 24 and 51 individually installed on the installation surfaces 17a and 17b of the printed circuit board 17 can be radiated efficiently by utilization of the first and second insulators 31 and 38.

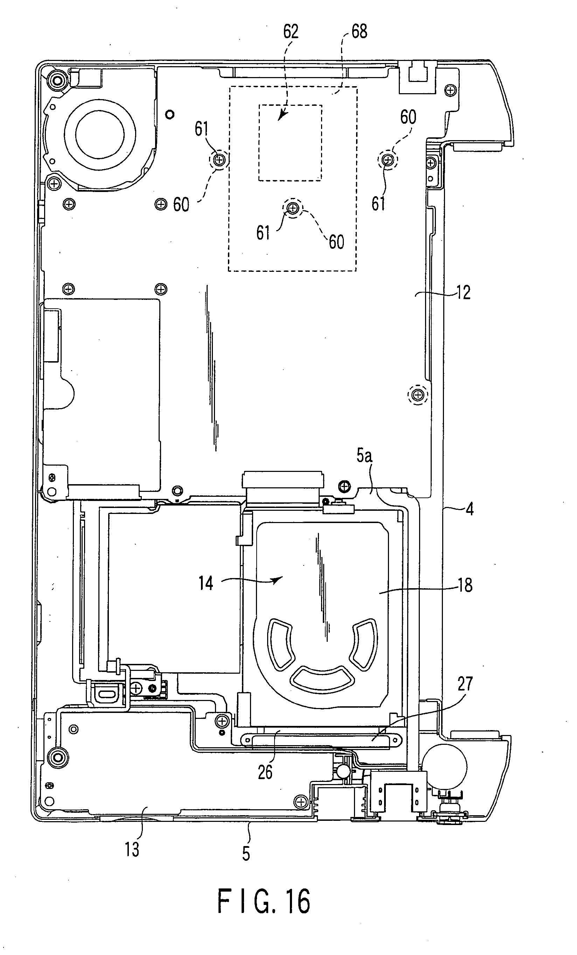

FIGS. 16 through 19 show the sixth embodiment of the present invention.

The sixth embodiment is directed to a structure that promotes heat radiation from the circuit components installed on the first printed circuit board 12. Except for this, the first and sixth embodiments are similar in the fundamental structures of the portable computers 1. In the sixth embodiment, therefore, the same reference numerals as used in the first embodiment denote similar or corresponding structural elements, and a detailed description of such structural elements will be omitted.

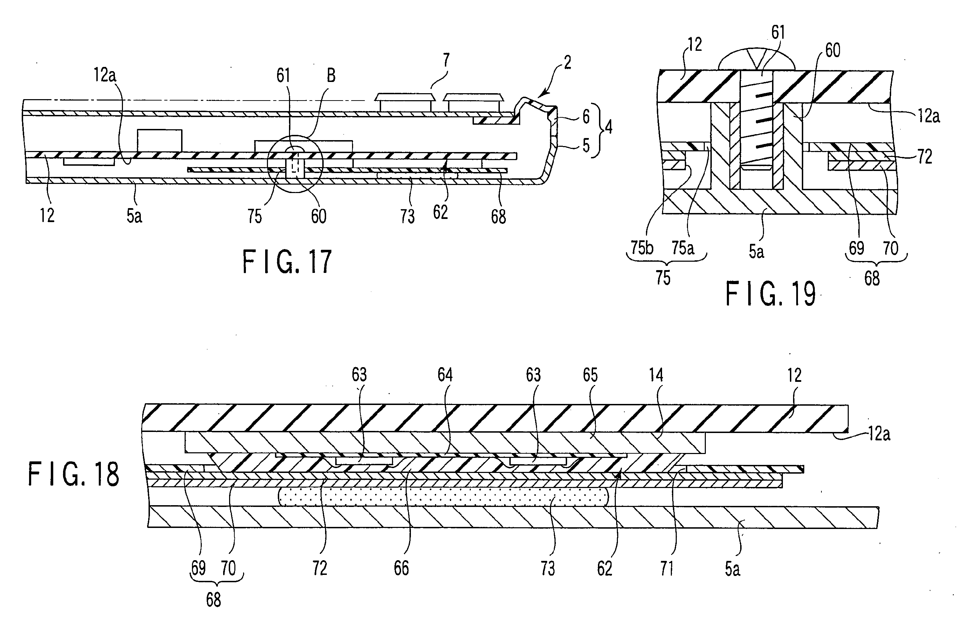

The lower housing 5 with which to support the first printed circuit board 12 is formed of a metallic material, such as a magnesium alloy, and therefore has thermal conductivity. As shown in FIGS. 16 and 17, the first printed circuit board 12 is fixed to the distal ends of projections 60 extending from the bottom wall 5a of the lower housing 5 by means of screws 61. The first printed circuit board 12 has an installation surface 12a opposed to the inner surface of the bottom wall 5a. A chip set 62, which is a circuit component, is supported on the installation surface 12a. This chip set 62 generates a very large amount of heat during operation, and the heat must be radiated efficiently to maintain a reliable operation.

As shown in FIG. 18, the chip set 62 includes: a thin film wiring layer 64 on which a plurality of bare chips 63 are mounted; a base 65 which supports the thin film wiring layer 64; and a mold member 66 which covers both the bare chips 63 and the thin film wiring layer 64. The base 65 is mounted on the installation surface 12a of the first printed circuit board 12. The mold member 66 is opposed to the bottom wall 5a of the lower housing 5.

A soft insulator 68 is interposed between the first printed circuit board 12 and the inner surface of the bottom wall 5a. The insulator 68 is used for providing electrical insulation between the installation surface 12a of the printed circuit board 12 and the bottom wall 5a of the lower housing 5, and is far larger than the chip set 62. The insulator 68 includes an insulating sheet 69 serving as an insulating layer, and a thermal conduction sheet 70 serving as a thermally conductive layer. The insulating sheet 69 is formed of a synthetic resin film having an electrically insulating characteristic, and covers the installation surface 12a of the first printed circuit board 12. The insulating sheet 69 has an opening 71 at a position opposed to the chip set 62. The opening 71 has a shape in which the chip set 62 can be fitted, and extends in the thickness direction of the insulating sheet 69.

The thermal conduction sheet 70 is made, for example, of a copper foil having excellent thermal conductivity. The thermal conduction sheet 70 is larger than the chip set 62 and is laid over the insulating sheet 69. A pressure sensitive adhesive double coated tape 72 is inserted between the thermal conduction sheet 70 and the insulating sheet 69. The adhesive double coated tape 72 is thermally conductive and adheres the thermal conduction sheet 70 to the insulating sheet 69. It should be noted that the thermal conduction sheet 70 covers most areas of the insulating sheet 69 which face the bottom wall 5a. This being so, the thermal conduction sheet 70 is located between the bottom wall 5a of the lower housing 5 and the insulating sheet 69.

As shown in FIG. 18, the thermal conduction sheet 70 covers the opening 71 of the insulating sheet 69 from the direction of the bottom wall 5a of the lower housing 5. With this structure, the thermal conduction sheet 70 is opposed to the chip set 62, with the opening 71 located therebetween.

The adhesive double coated tape 72, which adheres the thermal conduction sheet 70 to the insulating sheet 69, is exposed in the opening 71. At the position of the opening 71, the double coated tape 72 is located between the chip set 72 and the thermal conduction sheet 70. With this structure, the double coated tape 72 thermally connects the chip set 62 and the thermal conduction sheet 70 together.

As shown in FIGS. 17 and 18, an elastic member 73 is inserted between the thermal conduction sheet 70 and the bottom wall 5a of the lower housing 5. The elastic member 73 is made, for example, of a sponge having thermal conductivity. The elastic member 73 is sandwiched between the thermal conduction sheet 70 and the bottom wall 5a, so that the thermal conduction sheet 70 is thermally connected to the lower housing 5 through the elastic member 73.

As shown in FIGS. 17 and 19, the insulator 68 has a circular through hole 75. The through hole 75 includes a first opening region 75a extending in the thickness direction of the insulating sheet 69, and a second opening region 75b extending in the thickness direction of the thermal conduction sheet 70. The first opening region 75a and the second opening region 75b are coaxial with each other.

The distal end of the projection 60 of the bottom wall 5a is inserted in the through hole 75 of the insulator 68. With this structure, positional relationships between the lower housing 5 and the insulator 68 are determined, and the opening 71 of the insulating sheet 69 can be positioned with reference to the chip set 62.

In the structure described above, the chip set 62 mounted on the first printed circuit board 12 is thermally connected to the thermal conduction sheet 70 through the opening 71 of the insulating sheet 69. Therefore, the heat generated by the chip set 62 is transmitted directly to the thermal conduction sheet 70; it is not transmitted through the insulating sheet 69. In the thermal conduction sheet 70, the heat diffuses to each portion. Since the thermal resistance of the heat transmission path from the chip set 62 to the thermal conduction sheet 70 is reduced, the heat of the chip set 62 can be transmitted to the thermal conduction sheet 70 with high efficiency. Hence, the heat radiation performance of the chip set 62 is improved, and the temperature at which the chip set 62 operates can be kept at an optimal value.

The opening 71 of the insulating sheet 70 has a size in which the chip set 62 can be fitted. Therefore, the installation surface 12a of the first printed circuit board 12 is covered with the insulating sheet 69 at portions that are near the chip set 62, except for the portions corresponding to the chip set 62. Since the thermal conduction sheet 70 and the installation surface 12a of the first printed circuit board 12 do not come into contact with each other, the electrical insulation between them is reliable.

Therefore, short circuit troubles are prevented, and there is no need to provide a wide space for electrical insulation between the thermal conduction sheet 70 and the first printed circuit board 12. As a result, the housing 4 of the portable computer 1 can be thin and compact in size.

Moreover, since the projection 69 extending from the bottom wall 5a is inserted into the through hole 75 of the insulator 68, positional relationships between the insulator 68 and the lower housing 5 are determined. Hence, the insulator 68 is prevented from being shifted when it is laid over the bottom wall 5a of the lower housing 5.

The insulating sheet 69 and the thermal conduction sheet 70 are adhered to each other by means of the pressure sensitive adhesive double coated tape 72. This structure prevents the sheets 69 and 70 from being shifted relative to each other, eliminating the need to position the sheets 69 and 70. Hence, the portable computer 1 can be assembled with ease.

In the sixth embodiment described above, the lower housing is formed of a metallic material. However, this in no way restricts the present invention. For example, the lower housing may be formed of synthetic resin, and the inner surface of the lower housing may be coated with a plating layer.

## Claims

1. A storage device comprising:
a chassis (15);
a circuit board (17) supported by the chassis (15) and holding a circuit component (24, 51) which generates heat during operation; and
an insulating sheet (32, 52) covering the circuit board (17),
**characterized in that** the insulating sheet (32, 55) has an opening (34, 54) at a position opposed to the circuit component (24, 51), the opening (32, 54) is covered with a thermal conduction sheet (33, 53) from an opposite side to that of the circuit board (17), and the thermal conduction sheet (33, 53) is thermally connected to the circuit component (24, 51) through the opening (34, 54).

2. A storage device according to claim 1, **characterized in that** the circuit board (17) includes an installation surface (17a) facing the chassis (15) and holding the circuit component (24) mounted thereon, and the insulating sheet (32) is interposed between the installation surface (17a) and the chassis (15).

3. A storage device according to claim 2, **characterized in that** the chassis (15) is thermally conductive, and the thermal conduction sheet (33) is interposed between the chassis (15) and the insulating sheet (32) and is thermally connected to the chassis (15).

4. A storage device according to claim 1, **characterized in that** the thermal conduction sheet (33) is pressed against the circuit component (24) by means of an elastic member (41).

5. A storage device according to claim 4, **characterized in that** the chassis (15) and the elastic member (41) are thermally conductive, and the elastic member (41) is interposed between the thermal conduction sheet (33) and the chassis (15) and thermally connects the thermal conduction sheet (33) and the chassis (15) together.

6. A storage device according to any one of claims 2 to 5, **characterized in that** the chassis (15) includes a projection (20) protruding toward the circuit board (17), the insulating sheet (32) and the thermal conduction sheet (33) have through holes (37) into which the projection (20) is inserted, and the through hole (37) of the thermal conduction sheet (33) has edges which are located away from an outer peripheral surface of the projection (20).

7. A storage device according to any one of claims 1 to 5, **characterized in that** the thermal conduction sheet (33, 53) is larger than the circuit component (24, 51).

8. A storage device according to claim 1, **characterized in that** the thermal conduction sheet (33, 53) is laid over the insulating sheet (32, 52) and located on an opposite side to that of the circuit board (17).

9. A storage device according to claim 8, **characterized by** further comprising:
a thermally conductive adhesive layer (35, 55) interposed between the thermal conduction sheet (33, 53) and the insulating sheet (32, 52) and adheres the thermal conduction sheet (33, 53) and the insulating sheet (32, 52) together.

10. A storage device according to claim 9, **characterized in that** the adhesive layer (35, 55) is interposed between the thermal conduction sheet (33, 53) and the insulating sheet (32, 52) in such a manner as to avoid the opening (34, 54), and the thermal conduction sheet (33, 53) is in direct contact with the circuit component (24, 51) at a position corresponding to the opening (34, 54).

11. A storage device according to any one of claims 1 to 5, **characterized in that** the thermal conduction sheet (33, 53) is a metallic foil.

12. A storage device comprising:
a conductive chassis (15); and
a circuit board (17) supported by the chassis (15) and holding a circuit component (24, 51) which generates heat during operation,
**characterized in that** an insulator (31, 38) is interposed between the chassis (15) and the circuit board (17), the insulator (31, 38) including: an insulating layer (32, 52) covering the circuit board (17) and having an opening (34, 54) which is opposed to the circuit component (24, 51); and a thermal conduction layer (33, 53) covering the opening (34, 54) from an opposite side to that of the circuit board (17) and thermally connected to the circuit component (24, 51) through the opening (34, 54).

13. A storage device according to claim 12, **characterized by** further comprising:
a thermally conductive adhesive layer (35, 55) interposed between the insulating layer (32, 52) and the thermal conduction layer (33, 53) and adhering the insulating layer (32, 52) and the thermal conduction layer (33, 53) together.

14. A storage device according to claim 12 or 13, **characterized in that** the thermal conduction layer (33) of the insulator (31) is interposed between the chassis (15) and the insulating layer (32) and is thermally connected to the chassis (15).

15. A storage device according to claim 13, **characterized in that** the adhesive layer (35, 55) is interposed between the insulating layer (32, 52) and the thermal conduction layer (33, 53) in such a manner as to avoid the opening (34, 54), and the thermal conduction layer (33, 53) is in direct contact with the circuit component (24, 51) at a position corresponding to the opening (34, 54).

16. A storage device according to any one of claims 12 to 15, **characterized in that** the insulator (31, 38) is larger than the circuit component (24, 51).
